Europäisches Patentamt

European Patent Office

Office européen des brevets

(19)

(11) Publication number: 0 403 029
A1

## (12) EUROPEAN PATENT APPLICATION

(21) Application number: 90201557.7

(22) Date of filing: 15.06.90

(51) Int. Cl.⁵: H04B 10/20

(30) Priority: 16.06.89 NL 8901527

(43) Date of publication of application:
19.12.90 Bulletin 90/51

(84) Designated Contracting States:
AT BE CH DE DK ES FR GB GR IT LI LU NL SE

(71) Applicant: Koninklijke PTT Nederland N.V.
P.O. Box 95321
NL-2509 CH The Hague(NL)

(72) Inventor: Nijnuis, Hendrik Tiem
39 Disneystrook
NL-2726 SP Zoetermeer(NL)
Inventor: Tromp, Herman Rudolf Cornelis
35b Beukenlaan
NL-2665 DZ Bleiswijk(NL)

(54) Method for connecting subscribers via a system of optical fibre cables, to signal processing means in a network centre, and optical network in conformity with that method.

(57) The invention provides a method for the establishment and introduction of an optical network according to which private subscribers can be connected in such a way that for this category the network behaves like a network with a tree structure, whereas business subscribers can be connected in such a way that the network acts - dependent on the way it has been connected - as a star-shaped or a ring-shaped network capable of being routed in a single or in a double way. Thus, according to the invention a method is provided for connecting subscribers to signal processing means in a network centre via a system of optical fibre cables, which method is characterised

■ in that one or more cable loops comprising one or more optical fibre cables each consisting of one or more optical fibres will be formed between groups of subscribers and the network centre, the ends of which cable loops debouch into said network centre and into each of which cable loops one or more subscriber centres for connecting subscribers to a fibre cable, forming part of that cable loop, will be incorporated,

■ in that for the connection of a subscriber to said signal processing means, at least one of the optical fibres in the relevant subscriber centre will be interrupted, and at least one of the fibre ends thus formed will be connected either to only that subscriber, or to that subscriber and other subscribers, whereas the other end of a fibre thus connected to one or more subscribers in the subscriber centre will be connected to said signal processing means in the network centre.

The invention is based on the insight that if the fibre cables will be laid in loops and subscriber centres will be incorporated into these loops - at a relatively short distance from groups of subscribers - an optical fibre, which is thus led at rather a short distance along the relevant groups of subscribers, can always be connected to a subscriber in such a way as corresponds to the network structure desired for and by that subscriber.

FIG. 1

# Method for connecting subscribers, via a system of optical fibre cables, to signal processing means in a network centre, and optical network in conformity with that method.

## A. Background of the invention

The present invention relates to a method for connecting subscribers, via a system of optical fibre cables, to signal processing means in a network centre, as well as to an optical network for the transmission of optical signals between signal processing means in a network centre and subscribers via a system of optical fibre cables.

When establishing optical networks, forming the connection between for example a telecommunication exchange and telecommunication subscribers, the importance of which networks has increased strongly in the last few years, a number of factors have to be taken into account. Some of these factors relating to the design of such a network for use as a so-called local subscriber network are:
■ the network must be suitable for private as well as for business subscriber connections;
■ the network must be stable with regard to future technological upgrading and extension of services;
■ privacy of the connections should be assured;
■ technical malversation must be practically impossible;
■ housings of for example network centres and subscriber centres should be violence-proof and for example located underground;
■ especially for business connections the network should have a high availability for example by multiple possibilities of routing;
■ network exploitation and network control must be economical;
■ it must be possible to introduce new services quickly;
■ it must be possible to establish the network as an overlay network in order to make a phased introduction of the same possible in addition to the existing (electric) network.

Translated into network structures the above-mentioned specification of factors will result in the desire to be able to dispose of a network with different structures for various sorts of subscribers, to wit
■ a tree structure for private and for small business subscribers;
■ a star structure for middle-sized and for big business subscribers with a need for a flexible bandwidth;
■ a ring structure for middle-sized and for big business subscribers with a need for closed or semiclosed networks such as for example MANs (Metropolitan Area Networks).

## B. Summary of the invention

1. The invention provides a method for the (for example as an overlay network) establishment and introduction of an optical network which greatly meets said limiting conditions, and according to which private subscribers can be connected in such a way that for this category the network behaves like a network with a tree structure, whereas business subscribers can be connected in such a way that the network acts -dependent on the way it has been connected - as a star-shaped or a ring-shaped network capable of being routed in a single or in a double way. Thus, according to the invention a method is provided for connecting subscribers to signal processing means in a network centre via a system of optical fibre cables, which method is characterised
■ in that one or more cable loops comprising one or more optical fibre cables each consisting of one or more optical fibres will be formed between groups of subscribers and the network centre, the ends of which cable loops debouch into said network centre and into each of which cable loops one or more subscriber centres for connecting subscribers to a fibre cable, forming part of that cable loop, will be incorporated,
■ in that for the connection of a subscriber to said signal processing means, at least one of the optical fibres in the relevant subscriber centre will be interrupted, and at least one of the fibre ends thus formed will be connected either to only that subscriber, or to that subscriber and other subscribers, whereas the other end of a fibre thus connected to one or more subscribers in the subscriber centre will be connected to said signal processing means in the network centre.

The invention is based on the insight that if the fibre cables will be laid in loops and subscriber centres will be incorporated into these loops - at a relatively short distance from groups of subscribers - an optical fibre, which is thus led at rather a short distance along the relevant groups of subscribers, can always be connected to a subscriber in such a way as corresponds to the network structure desired for and by that subscriber. Thus, in fact the network has in the domain of the cable geometry a (multi) ring structure, whereas in the domain of the signal routing, for each subscriber connection one of the above-mentioned network structures, to wit a tree structure, a net structure or a ring structure, will be chosen. In other words, the cable structure is (multi) ring-shaped and the fibre structure is, dependent on the use, tree-shaped, star-shaped or ring-shaped.

2. The optical network formed when employing the above-mentioned method is characterised
- in that the fibre cables comprise one or more optical fibres,
- in that the fibre cables form cable loops, the ends of which debouch into said network centre,
- in that in such a cable loop one or more subscriber centres serving for the connection of subscribers to that fibre cable are incorporated,
- in that in such a subscriber centre at least one of the optical fibres is interrupted,
- in that at least one of the two ends of the interrupted fibre in the subscriber centre is connected to one or more subscribers, and the end of that fibre in the network centre is connected to said signal processing means.

It is remarked that said network centre can be for example a telecommunication exchange, but also a more local concentration point, which is for example incorporated in a star-shaped or a mesh-shaped network in which there are more of that sort of concentration points and one or more exchanges. Such a network centre can be passive - in which case signal processing is limited to the unprocessed passing on of the signals - or active, in which case signals are for example multiplexed in a certain way.

3. In order to make it possible for the method according to the invention to be carried out conveniently, the cable loops preferably comprise fibre cables which are formed by a system of more tubular casings each encasing one or more optical fibres and each separable from the rest of that system.

4. As the use of cable loops in the network according to the invention offers inter alia the possibility of routing connections along two geographically separated paths (double routing), the network comprises, according to a preferred embodiment of the invention, from the point of view of operational reliability a network centre comprising two geographically separated parts, into each of which parts, part of the ends of said cable loops debouches.

5. In order to optimise - especially for big business subscribers -the operational reliability also on the subscriber side, a preferred embodiment of the invention provides that a subscriber connected to the network via two or more optical fibres, is connected to that network via two or more subscriber centres, one part of the optical fibres coming from that subscriber being connected to one or more ends of the optical fibres interrupted in a first subscriber centre and belonging to the cable loop, and another part of which being connected to one or more ends of the optical fibres interrupted in a next subscriber centre.

## D. EMBODIMENTS

### 1. Figures

Figure 1 shows a diagrammatic representation of an optical network according to an embodiment of the invention, provided with more cable loops; figure 2 shows the same network, but with a differently designed network centre.

Figure 3 shows a diagrammatic representation of a subscriber centre incorporated in one of the cable loops, in which centre one cable conductor with four optical fibres is interrupted and one part of these fibres is connected to a number of private subscribers and another part to a business subscriber; figure 4 also shows a subscriber centre incorporated in one of the cable loops, in which centre one cable conductor with four optical fibres is interrupted, and part of these fibres is connected to a business subscriber.

Figure 5 shows an embodiment of the network according to the invention with a tandem network centre.

### 2. Description of the figures

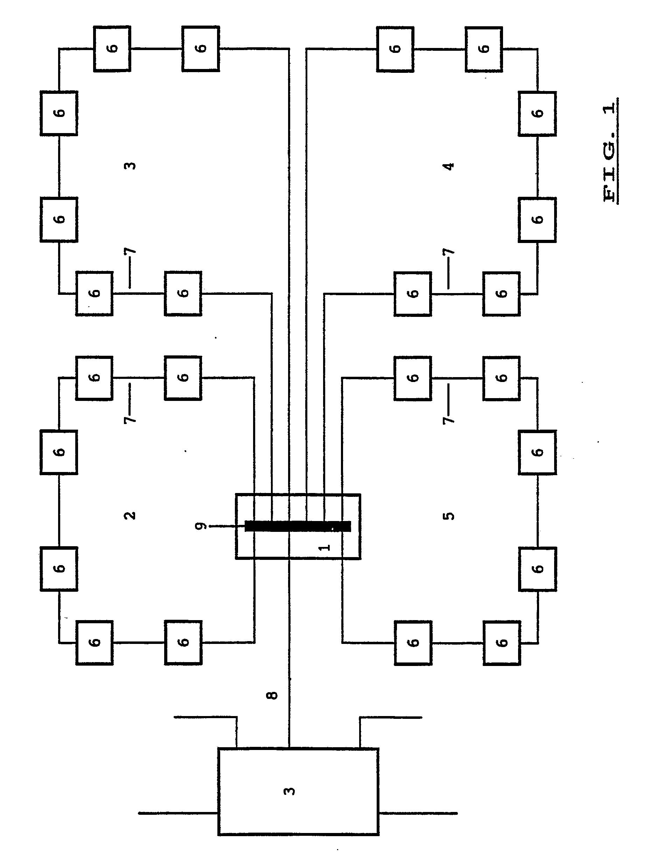

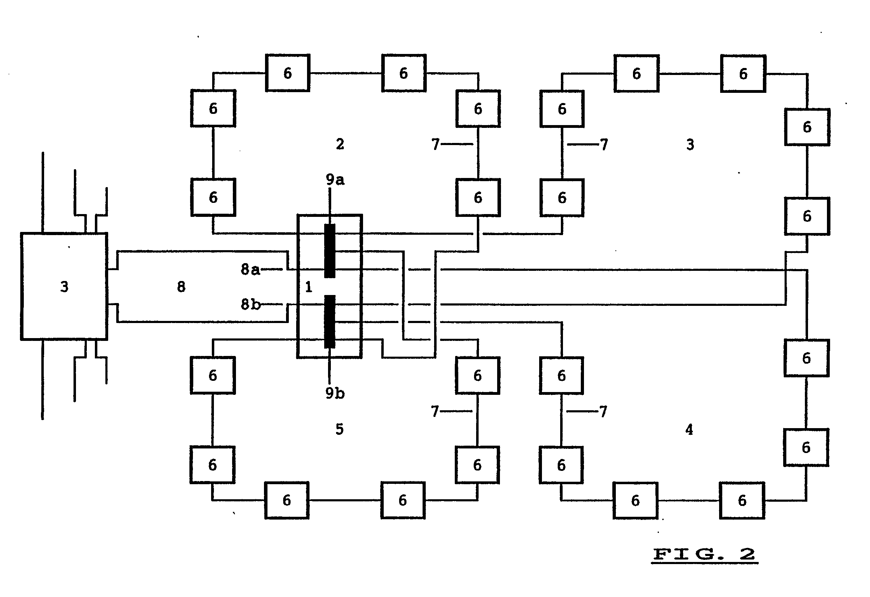

Figure 1 shows an optical local network formed by a network centre 1 and cable loops 2..5, which are formed by cables 7 and subscriber centres 6. The ends of the cables 7 of the cable loops 2..5 debouch into the network centre 1. An optical cable 8, which forms the connection with a telecommunication exchange 3, debouches into the other side of the network centre 1. In the network centre 1 there is a fibre coupler 9 to which on the one hand the ends of the optical fibres of the cables 7 can be connected and on the other hand the optical fibres of the cable 8. From the point of view of operational reliability it is preferred to design the cable 8 double, as it is shown in figure 2. In the embodiment shown in this figure the connection between the network centre 1 and the exchange 3 is formed by two separately laid (so geographically separated) cables 8a and 8b. Although, when using two cables 8a and 8b or one cable 8, the fibre coupler 9 in the network centre 1 can be the same in both cases (and consequently all the fibres can be connected to one another via one fibre coupler 9), it will be preferred, when two cables 8a and 8b are used, to install into the network centre 1 two of such couplers 9, in which case preferably - in order to obtain the best possible and most conveniently arranged geographical separation of bundles of fibres -it must be possible to connect the fibres of the one end of the respective cable loops 2..5 to the one coupler 9a and the fibres of the other cable-loop end to the other coupler 9b. In both cases the network centre 1 has a completely passive function; thus the signal processing means in the network centre as mentioned under B are formed by the (passive) fibre couplers 9, 9a, 9b. Each of the loops 2..5 comprises a number of subscriber centres 6, id est that the optical cables 7 by which the loops 2..5 are formed are led through these subscriber centres 6. These centres 6 serve to connect subscribers - private or small, middle-sized or big business ones - to the network, and via the network to the exchange 3. Neither the network centre 1 nor the subscriber centres 6 in the present embodiment perform an active (id est controllable) routing function.

Figures 1 and 2 consequently show that, irrespective of the subscribers or categories of subscribers that have to be connected, the network consists of cable loops 2..5 extending in areas where subscribers are settled or will settle and the cables 7 of whom have been led through through subscriber centres 6 intended for the connection of subscribers. A type of cable which has been developed especially for the establishment of the network described in the present specification is preferably used for cable 7; said type is formed by a system of a number (for example 6) of tubular casings, each encasing a number (for example four) of optical fibres. Each of the tubular casings can be separated from the other casings in a simple way (for example by cutting them loose) and be removed (for example by peeling them) as a result of which the inlying fibres can be approached.

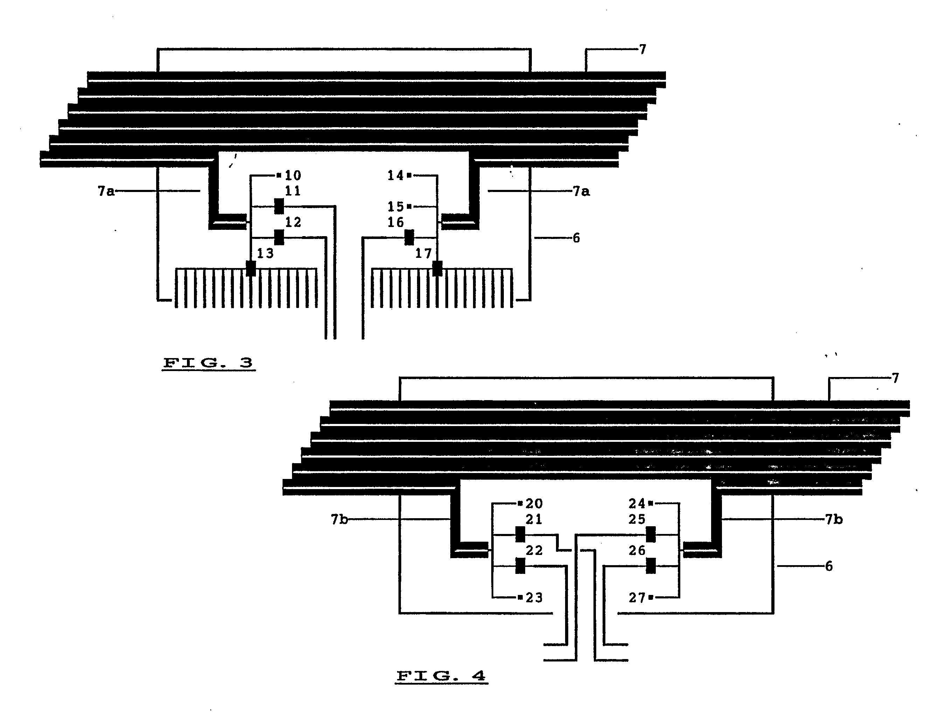

Only when a subscriber or a group of subscribers has to be connected to the exchange 3 via the network, an optical connection will be established from the subscriber to the most nearby subscriber centre 6, where one of the casings of the cable 7 led through will be cut loose from the other ones and peeled, after which the inlying fibres will be cut through. Figure 3 shows one of the subscriber centres in which the aforesaid actions have been performed. One of the casings 7a of the cable 7 has been peeled and the (four) inlying fibres have been cut through, resulting in the ends 10..17. The ends 10, 14 and 15 are not connected, but serve for the connection of future subscribers, if any. The end 11 is connected to a business subscriber, who needs a high speed of transmission and who is for that reason the only user of that fibre 11. Likewise a second business subscriber is connected to the end 12 and a third business subscriber to the end 16. The other ends of the fibres, the ends of which are indicated by 11, 12 and 16, are connected in the network centre 2 to the cable work 8, which further leads to the telecommunication exchange 1.

A number of 16 private subscribers are connected to both fibre ends 13 and 17. These subscribers are connected to the fibre ends via passive fibre couplers. As disclosed in the Netherlands patent application NL 8900707, for example a signal intended for one certain subscriber is modulated on a carrier wave, the frequency of which is specific to that subscriber, and that signal is frequency-specifically demodulated on the subscriber side. Likewise a signal to be transmitted by a subscriber to the exchange 3 is modulated at the subscriber's on a (second) frequency which is specific to that subscriber, due to which it can be determined in the exchange 3 with the aid of the carrier frequency from which subscriber the signal received has come.

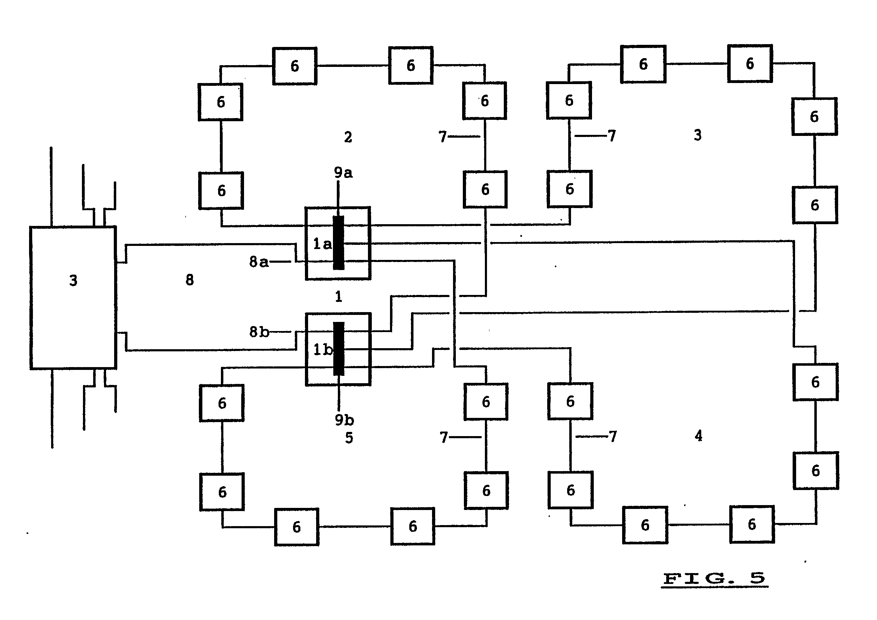

Figure 4 corresponds largely to figure 3 and also shows a subscriber centre 6 incorporated in one of the cable loops 2..5. Two (big) business subscribers are connected in said subscriber centre to four fibre ends 21, 22, 25 and 26, which have arisen by cutting through the fibres of one of the cable casings (which is not interrupted in another subscriber centre). Two business subscribers are connected in this figure to four fibre ends, to wit one subscriber to the fibre ends 21 and 26 and the second subscriber to the fibre ends 22 and 25. In this case the subscribers can have various grounds to be connected via a double fibre (two ways) to the network centre 1 and - via the cable work 8 - to the telecommunication exchange 3, to wit either to use one of the fibres as a spare fibre and to use that fibre only in the event that the fibre which is normally in use will not be available for example due to a calamity, or to form in that way together with more subscribers a ring network, in which case thus the one fibre serves as a to-fibre and the other one as a back-fibre. In both cases the two connections from the subscriber to the network centre 1 and to the telecommunication exchange are geographically separated from each other with the exception of the network centre 1. If desired, this network centre 1 can, however, be replaced by a tandem network centre consisting of two geographically separated parts, the one end of the cable loops 2..5 being always connected to the one part of the tandem network centre and the other end to the other part of it, due to which a completely geographical separation of the connections will be achieved, which is shown in figure 5. In this figure the geographically separated parts of the tandem network exchange 1 are indicated by 1a and 1b.

An even further form of geographical separation can be achieved by dividing also the telecommunication exchange 3 into two geographically separated exchanges. In that case the one end of each of the cable loops 2..5 will be connected to the one telecommunication exchange via part 1a of the network centre and cable 8a and the other end of each of the cable loops 2..5 to the other telecommunication exchange via part 1b of the network centre and cable 8b.

In figure 4 no subscribers are connected to the fibre ends 20, 23, 24 and 27, but, just like in figure 3, either a group of private (or small-business) subscribers with each of them a slow speed of transmission, or a (middle-sized or big-business) subscriber can be connected to each of said fibre ends.

Finally it is noted that it is quite possible to connect one (business) subscriber with two fibres to the network not via one subscriber centre as it is represented in figure 4, but via two subscriber centres (which are in the vicinity of the subscriber), as a result of which also on the subscriber side a completely geographical separation of the connections will be obtained due to which the chance of a disturbance will be minimalised.

**Claims**

1. A method for connecting subscribers, via a system of optical fibre cables, to signal processing means in a network centre, characterised
■ in that one or more cable loops (2..5) comprising one or more optical fibre cables (7) each consisting of one or more optical fibres will be formed between groups of subscribers and the network centre (1), the ends of which cable loops debouch into said network centre and into each of which cable loops one or more subscriber centres (6) for connecting subscribers to a fibre cable, forming part of that cable loop, will be incorporated,
■ in that for the connection of a subscriber to said signal processing means (9, 9a, 9b), at least one of the optical fibres (7a, 7b) in the relevant subscriber centre (6) will be interrupted, and at least one of the fibre ends (10..17 resp. 20..27) thus formed will be connected either to only that subscriber, or to that subscriber and other subscribers, whereas the other end of a fibre thus connected to one or more subscribers in the subscriber centre will be connected to said signal processing means in the network centre (1).

2. An optical network for the transmission of optical signals between signal processing means in a network centre and subscribers via a system of optical fibre cables, characterised
■ in that the fibre cables (7) comprise one or more optical fibres,
■ in that the fibre cables form cable loops (2..5), the ends of which debouch into said network centre (1),
■ in that in such a cable loop one or more subscriber centres (6) serving for the connection of subscribers to that fibre cable are incorporated,
■ in that in such a subscriber centre at least one of the optical fibres (7a, 7b) is interrupted,
■ in that at least one of the two ends of the interrupted fibre in the subscriber centre (6) is connected to one or more subscribers, and the end of that fibre in the network centre (1) is connected to said signal processing means (9, 9a, 9b).

3. An optical network in accordance with claim 2, characterised by fibre cables (7), which are formed by a system of more tubular casings each encasing one or more optical fibres and each separable from the rest of that system.

4. An optical network in accordance with claim 2, characterised by a network centre (1), comprising two geographically separated parts (1a, 1b), into each of which parts, part of the ends of said cable loops (2..5) debouches.

5. An optical network in accordance with claim 2, characterised in that a subscriber connected to the network via two or more optical fibres, is connected to that network via two or more subscriber centres (16), one part of the optical fibres coming from that subscriber being connected to one or more ends of the optical fibres interrupted in a first subscriber centre and belonging to the cable loop, and another part of which being connected to one or more ends of the optical fibres interrupted in a next subscriber centre.

**FIG. 1**

FIG. 2

FIG. 3

FIG. 4

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 673 246 (J.J. SCHEMBRI) <br> * Abstract; column 1, lines 25-31,54-63; column 2, lines 11-34,40-57; column 3, lines 24-49,54-58; column 4, line 1 - column 5, line 6 * <br> --- | 1-3 | H 04 B 10/20 |
| P,X | US-A-4 871 225 (J.J. SCHEMBRI) <br> * Abstract; column 1, lines 25-31,47-52,54-62; column 2, lines 9-13,45-64; column 3, lines 11-30,46-49,59-64; column 4, line 60 - column 7, line 11; column 8, lines 10-52 * <br> --- | 1-3 | |
| A | WO-A-8 701 539 (PACIFIC BELL) <br> * Page 3, line 12 - page 4, line 6 * <br> ----- | 1-3 | |
| | | | **TECHNICAL FIELDS SEARCHED (Int. Cl.5)** <br><br> H 04 B <br> H 04 L <br> H 04 H <br> H 04 Q <br> H 04 M |

The present search report has been drawn up for all claims

| Place of search | Date of completion of the search | Examiner |
|---|---|---|
| THE HAGUE | 05-09-1990 | STAESSEN B.F. |